# EUROPÄISCHE PATENTSCHRIFT

(11) **EP 0 518 062 B1**
(45) Veröffentlichungstag und Bekanntmachung des Hinweises auf die Patenterteilung: **28.12.1994**
(21) Anmeldenummer: 92107923.2
(22) Anmeldetag: 12.05.1992
(51) Int. Cl.: C08L 101/00, C08L 23/12, C08L 77/02

(54) **In-situ Polymerlegierungen und Mikroverbunde sowie Verfahren zu ihrer Herstellung**
Polymer alloys prepared in-situ, and composites containing microfibers
Alliages de polymères préparés in situ et matériaux composites contenant des fibres microscopiques

(30) Priorität: 11.06.1991 DE 4119146
(43) Veröffentlichungstag der Anmeldung: 16.12.1992
(73) Patentinhaber: REHAU AG + Co, 95111 Rehau (DE)
(72) Erfinder: Mülhaupt, Rolf, Prof. Dr., W-7800 Freiburg (DE); Rösch, Joachim, Dipl.-Chem., W-7803 Gundelfingen (DE); Hopperdietzel, Siegfried, Dr., W-8672 Selb (DE); Weinberg, Ekkehard, Dr., W-8671 Schönwald (DE); Klein, Herbert, Dr., W-8670 Hof/Saale (DE)

(56) Entgegenhaltungen:
- EP-A- 0 408 166
- GB-A- 2 060 649
- POLYMER BULLETIN Bd. 18, 1987, BERLIN Seiten 397 - 401; ALLISON M. SIKES ET AL.: 'SYNTHESIS AND CHARACTERIZATION OF IN SITU ANIONICALLY POLYMERIZED P-AMINOBENZOYLCAPROLACTAM USING DI AND TRI-FUNCTIONAL INITIATOR SYSTEMS'
- JOURNAL OF APPLIED POLYMER SCIENCE. Bd. 32, 1986, NEW YORK US Seiten 6299 - 6315; D. ROGER MOORE ET AL.: 'MOLECULAR COMPOSITES VIA IN SITU POLYMERIZATION : POLY(PHENYLENE TEREPHTHALAMIDE)-NYLON 3'

## Beschreibung

Die vorliegende Erfindung betrifft neuartige Polymer-Mischungen sowie Verfahren zu ihrer Herstellung, die dadurch gekennzeichnet sind, daß in der Schmelze der Komponente A, bestehend aus einem oder mehreren thermoplastischen Polymeren, die Komponente B, bestehend aus einer oder mehreren Verbindungen mit der Struktur 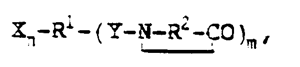
zu linearen, verzweigten oder vernetzten, hoch- oder niedermolekularen Polymeren umgesetzt wird, wobei X = NH₂, NHR³, Y = CO, SO₂, R⁵P=O, R¹ einen zwei- oder mehrwertigen aliphatischen, aromatischen, heterocyclischen oder heteroatomhaltigen Rest, R² einen zweiwertigen aliphatischen Rest (CH₂)ₒ mit 1<o<15, R³ und R⁵ aliphatische, cycloaliphatische und aromatische Reste und n,m ganze Zahlen mit 1≦m,n≦5, vorzugsweise m=n=1, bedeuten. Erfindungsgemäß kann die Komponente B auch aus Verbindungen der Struktur 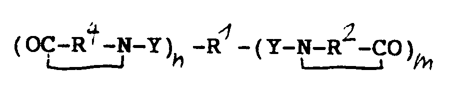
bestehen, in der R einen zweiwertigen aliphatischen Rest der Formel (CH₂)ₒ mit 1<o<15 darstellt und wobei die Komponente B mit aromatischen, aliphatischen, cycloaliphatischen oder araliphatische Diaminen bei einem Lactam/Diamin-Molverhältnis größer als 0,5 und kleiner als 1,5 zur Reaktion gebracht wird. Die Komponente B wird in der Schmelze der Komponente A zu nieder- oder hochmolekularen Reaktionsprodukten umgesetzt, wobei dann, wenn X ebenfalls ein N-substituiertes, mit einem elektronenziehenden Substituenten Y aktiviertes Lactam darstellt, ein oder mehrere aliphatische, aromatische, araliphatische oder cycloaliphatische Diamine zugesetzt werden. Verwendet man steifkettige Reste R1, so können sich Mikroverbunde bilden, die dadurch gekennzeichnet sind, daß in der kontinuierlichen Phase der Komponente A Mikrophasen, bestehend aus dem Reaktionsprodukt der Komponente B, dispergiert sind. Bei anisotropen Mikrophasen mit eine Längen/Durchmesserverhältnis >1 kann die Steifigkeit der Komponente A erhöht werden.

Eine wichtige Eigenschaft von Polymer-Werkstoffen, insbesondere von Konstruktionswerkstoffen, ist die Steifigkeit. Häufig wird bei der Konzeption solcher Werkstoffe u.a. aus Kostengründen so vorgegangen, daß ein weniger steifes Polymermaterial mit anorganischen Verstärkungsstoffen wie Talkum, Kreide, Glimmer oder Glasfasern versetzt wird. Nachteilig dabei ist, daß in der Regel die Schlagzähigkeit erniedrigt wird. Gleichzeitig werden durch die Zugabe des Verstärkungsstoffes andere Eigenschaften, z.B. das Fließverhalten und die Verschweißbarkeit, negativ beeinflußt. Die beispielhaft erwähnten Eigenschaftsverschlechterungen sind umso ausgeprägter, je mehr Verstärkungsstoff beigegeben wird. Es wird deshalb angestrebt, Verstärkungsstoffe mit möglichst hoher Verstärkungswirkung und in nur geringen Konzentrationen einzusetzen. Für technische Anwendungen sind in dieser Hinsicht faserförmige Verstärkungsstoffe, insbesondere Kurz- und Langglasfasern , am besten geeignet, die andererseits aber besondere Maßnahmen zur Verhinderung von Faserbrüchen bei der Fasereinarbeitung erfordern und zu oft unerwünschten Faserabzeichnungen an der Oberfläche der Werkstücke führen.

Neben anorganischen Verstärkungsstoffen werden zur Versteifung auch steife Polymere eingesetzt. Die Mischung der beiden Polymere kann dabei homogen oder heterogen, d.h. ein- oder zweiphasig, sein und insbesondere kann in der Mischung das verstärkende Polymer in Form von Fasern vorliegen. Besondere verstärkende Wirkungen sind von organischen Polymer-Fasern, die aus einem thermoplastischen Polymer bestehen, jedoch nicht bekannt. Eine Ausnahme bilden gereckte Polyethylenfasern, die zwar eine hohe Festigkeit aufweisen, aber aufgrund ihres niedrigen Schmelzpunktes z.B. nicht in Polypropylen oder Polyamid und wegen ihres unpolaren Charakters nicht immer ohne zusätzliche Maßnahmen der Haftungsverbesserung zur umgebenden Polymermatrix eingesetzt werden können. Eine Verstärkungswirkung etwa wie Glasfasern zeigen die nicht-thermoplastischen Polyparabenzamide (Aramide) als Kurzfasern in Polyamid 66 mit dem gegenüber der Glasfaserverstärkung herausragenden Vorteil, daß die z.B. extrudierten Verbundwerkstoffe in ihrem Festigkeitsverhalten isotrop sind. Die Einarbeitung von vorgefertigten Aramidfasern in Thermoplaste ist wie bei Glasfasern insofern technisch aufwendig, als dabei ein Bruch der Fasern vermieden werden muß. Eine gleichmäßige Dispergierung der Aramidfasern in z.B. Polyamid gelingt nur unter Einsatz spezieller Phasenvermittler, die die Anbindung der Aramidfaser an die PA-Matrix gewährleisten (synthec, 9403 Goldach, 1 (1989), S. 8-11). In PA66 wird nach diesem Verfahren der E-Modul durch 20 Gew.% Aramid-Fasern um 71% erhöht.
Ein weiteres bekanntes Beispiel für den Einsatz eines Aramids als Verstärkungsfaser ist die Einarbeitung von Polyparaterephthalamid (PPTA) in Polyamid 6 über die gemeinsame Schwefelsäurelösung nach Takayanagi et al., J. Macromol. Sci. Phys., B 17, 591 (1980). Das PPTA bildet beim Ausfällen Mikrofasern, die in der PA6-Matrix dispergiert sind. Hier wird der E-Modul von PA6 bereits bei 5 Gew.% PPTA-Fasern auf fast das Doppelte erhöht. Da PPTA nicht schmelzbar ist, ist es allerdings nicht möglich, ein PPTA-Mikrofaser-verstärktes PA6 z.B. über ein Schmelzemischverfahren herzustellen, so daß diese interessanten Verbundwerkstoffe nach dem Verfahren von Takayanagi im industriellen Maßstab nur mit erheblichem Aufwand erhältlich währen.

Die Arbeiten, die zu der vorliegenden Erfindung geführt haben, hatten zum Ziel, über ein für die industrielle Praxis geeignetes und einfaches Verfahren eine Verstärkung eines Polymers A durch organische Fasern zu bewirken. Die Aufgabe sollte dadurch gelöst werden, daß Monomere B in der Schmelze des Polymers A zu möglichst steifen linearen, verzweigten oder vernetzten, hoch- oder niedermolekularen Reaktionsprodukten umgesetzt werden. Gegenüber dem bekannten Stand der Technik sollte dadurch erreicht werden, daß speziell mit Aramiden als verstärkendem Polymer die Mischungen über einen Schmelze-Extrusionsprozeß hergestellt werden können und andererseits die technisch aufwendige Dispergierung vorgefertigter Aramidfasern in z.B. Polyamid entfallen kann. Gleichzeitig sollte der Anteil des verstärkenden Polymers bei vergleichbarer Verstärkung möglichst geringer sein als nach dem Stand der Technik, um eine negative Beeinflussung z.B. der Verschweißbarkeit des Verbundwerkstoffes so gering wie möglich zu halten.

Zur Lösung der Aufgabe wurde herangezogen, daß N-substituierte, durch elektronenziehende Substituenten aktivierte Lactame, welche eine weitere funktionelle Gruppe enthalten, mit N-aktivierten Lactamen zu höhermolekularen Verbindungen reagieren können. Werden p-Aminobenzoylcapro- oder -laurinlactame, wie von L.J. Mathias, D.R. Moore, C.A.Smith in J.Polym.Sci.,Polym.Chem.Ed., 25, 2699 (1987) beschrieben, entweder bei Temperaturen <200°C durch Lactamabspaltung oder bei Temperaturen >200°C durch ringöffnende Polymerisation polymerisiert, so entstehen unlösliche, thermoplastisch nicht verarbeitbare Polyparabenzamide oder gemischt aromatisch/aliphatische Polyamide.

Die gestellte Aufgabe wurde erfindungsgemäß dadurch gelöst, daß die Polymerisation N-aktivierter Lactame, die eine weitere funktionelle Gruppe enthalten, bezeichnet als Komponente B, in der Schmelze von Thermoplasten, bezeichnet als Komponente A, durchgeführt wurde. Im Falle A = Polyamid 6 und B = N-(p-aminobenzoyl)-caprolactam wurden aromatisch/aliphatische Polyamidcopolymere gebildet, die als Mikrofasern in PA6 dispergiert sind, wodurch der E-Modul des Polyamids 6 bei Zugabe von nur 5 Gew.% N-(p-aminobenzoyl)-caprolactam auf fast das Doppelte erhöht wird. Die Oberfläche von Formstücken aus einem solchen Verbundwerkstoff ist aufgrund der geringen Faserabmessungen glatt.

Neu und nicht vorhersehbar war der Befund, daß die in der Thermoplast-Schmelze gebildeten Polyamid-Copolymere sich zu Mikrofasern aggregieren und nicht als Partikel ohne Vorzugsachse oder, wie bei über die Schmelze hergestellten Polymermischungen üblich, als disperse Phase mit z.B. kugelförmiger Gestalt oder als dehnströmungsinduzierte Grobfasern anfallen. Die Bildung der anisotropen Partikel resultierend aus der Polymerisation von z.B. p-Aminobenzoylcaprolactam in PA6 oder PP ist nicht dehnströmungsabhängig.

Überraschend war auch der Befund, daß die Polymerisation von p-Amino-benzoesäureethylester, der anders als B keine aktivierte Lactamstruktur enthält, in der Schmelze eines Thermoplasten nicht zu anisotropen Partikeln führt, obwohl die entstehenden Poly-p-benzamide ebenfalls zur Faserbildung befähigt wären.

Die nach dem erfindungsgemäßen Verfahren aus B = N-(p-aminobenzoyl)-caprolactam erhaltenen Mikrofasern sind nicht unzersetzt schmelzbar, in Schwefelsäure nicht lösllch, hochkristallin, und enthalten nach 13C-Festkörper-NMR aliphatische und aromatische Gruppen. Somit stellen die Mikrofasern aliphatisch/ aromatische Polyamide dar.

Es war daher überraschend, daß die aus p-Aminobenzoylcaprolactam in Polyamid 6 erhaltenen Mikrofasern trotz der vorhandenen, aus der Ringöffnung des Lactams resultierenden aliphatischen Gruppen, eine Verstärkungswirkung zeigen, die der von Polyparaterephthalamid-Mikrofasern (PPTA), eingebracht nach Takayanagi über eine Schwefelsäurelösung von PA6 und PPTA, vergleichbar ist (78% E-Modulerhöhung gegenüber 67 % mit PPTA, Molgewicht ca. 1000g/mol).

Es ist somit gelungen, in bisher nicht bekannter Weise durch Hochmodulmikrosasern verstärkte Thermoplaste herzustellen, die nach den bekannten Verfahren der Herstellung speziell zweiphasiger Legierungen einerseits über die Lösung der beiden Legierungspartner nicht erhalten werden können, da die disperse Phase in den bekannten Lösemitteln nicht löslich ist, andererseits auch über die Schmelze nicht erhalten werden können, da die polymere Komponente B mit B = p-Aminobenzoylcaprolactam nicht unzersetzt schmelzbar ist.

Das erfindungsgemäße Verfahren ist darüberhinaus ohne weiteres für die technische Anwendung geeignet, während dies bei dem erwähnten bekannten Verfahren der Herstellung von PPTA-mikrofaserverstärktem Polyamid 6 über die Schwefelsäurelösung nur mit erheblichem Aufwand möglich wäre.

Gegenüber reinem PA6 wird mit den erfindungsgemäßen in situ - Polymerlegierungen aus PA6 und nur 5 Gew.% p-Aminobenzoyl-caprolactam eine E-Modul-Steigerung auf fast das Doppelte und damit das Niveau von heute üblichen höherwertigen teilaromatischen Polyamiden oder von Polyamid 46 erreicht.

Nach dem erfindungsgemäßen Verfahren der Polymersiation N-aktivierter Caprolactame in der Schmelze eines Polymers können auch solche Polymerlegierungen hergestellt werden, deren Polymerkomponenten durchwegs thermoplastisch sind. Je nach Phasendiagramm der entstehenden Polymermischungen können auch hier homogene oder mehrphasische Polymermischungen mit verstärkenden Mikrofasern entstehen.

Bei der Komponente A handelt es sich um thermoplastisch verarbeitbare nieder- und hochmolekulare Polymere, vorzugsweise mit Zahlenmittel des Molekulargewichtes (Mₙ) 1000<Mₙ<700000. Geeignet als Komponenten sind ein oder mehrere thermoplastische Olefinhomo- und -copolymere, z.B. von Ethylen, Propylen, Buten-1, 4-Methyl-1-penten, 1-Octen, 1-Hexen, Vinylacetat, Methacrylsäure und deren Derivaten, insbesondere den Methyl-, Ethyl- und Butyl-estern, Styrol, Acrylnitril, Butadien, Vinylchlorid, Malein- oder Fumarsäure sowie deren Derivaten, insbesondere Maleinsäureanhydrid und Fumarsäurediestern. Die Copolymerisation muß so durchgeführt werden, daß Komponente A thermoplastisch verarbeitbar ist, vorzugsweise bei Temperaturen <100°C. Ferner kann Komponente A aus einem oder mehreren polaren, heteroatomhaltigen thermoplastischen Polymeren bestehen. Beispiele sind Polykondensate aus aromatischen, aliphatischen, araliphatischen, cycloaliphatischen Diolen oder Diaminen mit aromatischen, aliphatischen, araliphatischen, cycloaliphatischen Dicarbonsäuren oder Hydroxycarbonsäuren. Als Diol sind geeignet 1,2-Ethandiol, 1,4-Butandiol, Neopentylglykol, Diethylenglykol, 1,4-Cyclohexandiol, Bisphenol A, 1,4- und 2,6-Dihydroxynaphthalin, Hydrochinon, 2-Chlorhydrochinon, 4,4'-Dihydroxybiphenyl. Beispiele für Diamine sind p-Phenylendiamin, m-Phenylendiamin, 4,4'-Diaminobiphenyl, Napthalindiamine, Bis-(p-aminobenzoyl)-funktionelle Verbindungen. Beispiele für Dicarbonsäuren sind Terephthal-, Isophthal-, 4,4'-Biphenyldicarbonsäure, Bernstein-, Adipin-, Sebazin-, Kork-, Fumar- und Maleinsäure. Beispiele für Hydroxycarbonsäuren sind Hydroxycapronsäure, p-Hydroxybenzoesäure. Diese Monomerbausteine können nach den dem Fachmann bekannten Verfahren copolymerisiert werden. Heteroatomhaltig bedeutet, daß ein Segment auch Atome in der Hauptkette aufweisen kann, die von C verschieden sind. Ferner können Polyestercarbonate, Polycarbonate und Polyether, insbesondere Polyphenylenether, Polyphenylenoxid und Polyphenylensulfid, verwendet werden. Bei den Komponenten A kann es sich um amorphe, teilkristalline oder flüssigkristalline Polymere handeln. Es können auch Blockcopolymere oder Legierungen der oben beschrieben Polymeren eingesetzt werden.

Bei der Komponente B handelt es sich um Lactamverbindungen, bestehend aus einer oder mehreren Verbindungen mit der Struktur 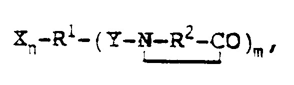
die zu linearen, verzweigten oder vernetzten, hoch- oder niedermolekularen Polymeren umgesetzt wird, wobei X = NH₂, NHR³, OH oder ein N-substituiertes, mit einem elektronenziehenden Substituenten Y aktiviertes Lactam des Typs 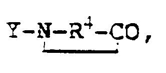
Y = CO, SO₂, R⁵P=O, R¹, R², R⁴ zwei- oder mehrwertige aliphatische, aromatische, heterocyclische oder heteroatomhaltige Segmente, R² und R⁴ vorzugsweise einen zweiwertigen aliphatischen Rest (CH₂)ₒ mit 1<o<15, R³ und R⁵ aliphatische, cycloaliphatische und aromatische Reste und n,m ganze Zahlen mit 1<m,n<5, vorzugsweise m=n=1, bedeuten.

Handelt es sich um polyfunktionelle Lactame, wo X ebenfalls ein N-aktiviertes Lactam darstellt, so werden dieser Komponente B Diole oder Diamine, vorzugsweise 1Mol OH bzw. NH₂ / 1 Mol N-aktiviertem Lactam, zugesetzt, um diese Komponente B zu höhermolekularen Verbindungen umzusetzen. Dabei wird das Lactam abgespalten und muß aus der Reaktionsmischung, z.B. durch Entgasen, entfernt werden. Beispiele für diese Komponenten sind Terephthaloyllactame.

Handelt es sich um N-aktivierte Lactame, wo die funktionelle Gruppe X kein Lactam, sondern eine Hydroxy- oder Amingruppe darstellt, so kann Komponente B ohne weitere Zusätze umgesetzt werden.

In Abhängigkeit von den Reaktionsbedingungen und der chemischen Zusammensetzung von Komponente B kann die Polymerisation unter Abspaltung der Lactame oder durch Ringöffnung des Lactams erfolgen.

Als Lactame sind besonders bevorzugt Caprolactam und Laurinlactam. Die Lactame lassen sich in dem Fachmann bekannter Weise z.B. aus mono- und polyfunktionellen cyclischen Ketonverbindungen oder aus Amincarbonsäure-bzw. Aminocarbonsäurederivaten, bevorzugt der Aminocapron- oder Aminovaleriansäure, herstellen. Als Komponente B bevorzugt sind Verbindungen enthaltend N-substituierte, durch elektronenziehende Substituenten Y aktivierte cyclische Lactame und aromatische Amine, Phenole, oder Alkohole, wobei die Nucleophilie der Phenole, Amine oder Alkohole so zu variieren ist, daß erst beim Erhitzen eine schnelle Reaktion eintritt. Bevorzugt sind p-Aminobenzoyllactame, z.B. p-Aminobenzoylcaprolactam.

Bei dem Rest R¹ handelt es sich um zwei oder mehzwertige aliphatische, aromatische, araliphatische, cycloaliphatische, heterocyclische oder heteroatomhaltige Segmente. Heteroatomhaltig bedeutet, daß aliphatische, aromatische, araliphatische oder cycloaliphatische Segmente im Rückgrat neben C-Atomen auch andere Atome wie N,S,P enthalten können, bevorzugt sind aromatische Ether, Sulfone, Thioether sowie Ester oder Amide. Beispiele für R1 sind 1,3- und 1,4- Benzol, 4,4'-Stilben, Alkylene, 1,4-Cyclohexan, hydriertes Bisphenol A nach Entfernen der beiden OH-Gruppen, Oligomere Polyamide, Polyester, Polyether, Polycarbonate. In Abhängigkeit von der Natur der funktionellen Gruppen X und Y leiten sich die Reste R¹ von symmetrisch oder asymmetrisch substituierten Verbindungen ab, bevorzugt von Amincarbonsäuren und Aminosulfonsäuren nach Entfernen der funktionellen Gruppen.

Die Mischung der Komponenten A und der polymerisierten Komponente B kann ein- oder mehrphasig sein. Bevorzugt sind Mischungen, die dadurch gekennzeichnet sind, daß in der kontinuierlichen Phase der Komponente A Mikrophasen der Komponente B dispergiert sind. Vorzugsweise beträgt deshalb der Gewichtsprozent-Anteil der Komponente B weniger als 50, bevorzugt weniger als 25. Falls die Reaktionsprodukte der Komponente B selbst thermoplastisch sind, können bis zu 90 Gewichtsprozent der Komponente B zugesetzt werden.

Neben den Komponenten A und B können Hilfsmittel zugesetzt werden, um die Anbindungen der Mikrophasen zu verbessern. Bei diesen Hilfsmitteln, den sogenannten Phasenvermittlern, handelt es sich bevorzugt um funktionalisierte Polymere abgeleitet von Komponente A, deren funktionelle Gruppe mit den Gruppen X reagieren kann. Bei den funktionellen Gruppen X = Amin sind carbonsäureanhydrid-funktionalisierte Polymere von besonderer Bedeutung, z.B. maleinsäureanhydridgepfropftes Polypropylen, falls es sich bei Komponente A um Polypropylen handelt, oder Styrol/Maleinsäureanhydrid-Copolymere mit weniger als 50 Gew.%, bevorzugt weniger als 10 Gew.% Maleinsäureanhydridgehalt, falls es sich bei Komponente A um Polystyrol handelt.

Für Mikroverbunde mit Verstärkungswirkung werden bevorzugt Komponenten gewählt, wo Komponente A und B in der Schmelze mischbar sind und Phasentrennung erst bei der Reaktion der Komponente B eintritt. Zudem sind Komponenten B bevorzugt, die nach erfolgter Reaktion steife oder flüssigkristalline Polymere bilden. Bevorzugt sind Kombinationen, wo es sich bei Komponente A um Polyamide, insbesondere Polyamid-6, Polyamid-66, Polyamid-4, Polyamid-11, und bei Komponente B um p-Aminobenzoyllactame, insbesondere p-Aminobenzoylcaprolactam und p-Aminobenzoyl-laurinlactam, handelt. Die Komponente B wird im Fall von Polyamid/p-Aminobenzoyllactam in Gewichtsprozenten <50, bevorzugt <10, zugesetzt. Bevorzugt sind Temperaturen oberhalb der Erweichungstemperatur der Komponente A.

Die Komponente A kann vor dem Aufschmelzen oder nach dem Aufschmelzen mit der Komponente B kombiniert werden. Vorzugsweise wird die Komponente B als Pulver in die Schmelze von A gegeben. Die funktionellen Gruppen sind so zu wählen, daß die UmSetzung der Komponete B innerhalb von weniger als 10 Minuten erfolgt. Auf diese Weise kann die Mischung in-situ, d.h. während der Verarbeitung der Komponente A durchgeführt werden. Bei der Polymerisation der Komponente B werden mehr oder weniger große Anteile der N-aktivierte Lactame abgespalten und können im Vakuum aus der Schmelze entfernt werden. Im Fall der polyfunktionellen Lactame, wo ein Zusatz von Diol bzw. Diamin erforderlich ist, kann das Polylactam mit Komponente A vorgemischt und dann mit der Diol- bzw. Diamin-Komponente kombiniert werden, oder es kann auch umgekehrt verfahren werden. Bevorzugt sind Verfahren, wo p-Aminobenzoyllactam zur Schmelze eines Polyamid-6 bei Temperaturen >220°C zudosiert und innerhalb von weniger als 10 Minuten polymerisiert wird. Die Herstellung der Mischungen kann im Ein-oder Zweischneckenextruder oder in einem Kneter erfolgen.

Neben den Komponenten A und B können weitere Zusatzstoffe und Hilfsmittel zugesetzt werden. Beispiele sind Antioxidantien, Lichtschutzmittel, Flammschutzmittel, Weichmacher, Flexibilisatoren, Elastomere, Füllstoffe, Fasern, Kurzfasern, Farbstoffe, Pigmente und andere in der Thermoplastverarbeitung üblichen Stoffe.

Die erfindungsgemäßen Mischungen sind mit den für Thermoplaste üblichen Verfahren verarbeitbar und eignen sich daher für die Herstellung von spritzgegossenen, extrudierten und blasextruten Formteilen, von Klebstoffen, Beschichtungen, Fasern, Filmen, und Folien.

### Patentbeispiele

### Herstellung

### Beispiel 1

In einem Haake Rheomix Meßkneter werden in einer auf 220°C vorgeheizten 60ml Meßkammer 31g Polypropylen (Schmelzindex 2g/min bei 230°C/2.13kg) und 5g carbonsäureanhydridfunktionelles Polypropylen ( 0.37 Gew.% gepfropftes Maleinsäureanhydrid, Schmelzindex 125.3 g/min bei 230°C/2.16kg) 2 Minuten bei 220°C und 60U/min aufgeschmolzen. Dann gibt man 4g p-Aminobenzoylcaprolactam zur Schmelze. Während 30 Sekunden nimmt das Drehmoment von 4.3 auf 0.5 Nm ab und steigt nach weiteren 30 Sekunden auf 3.8 Nm an. Dann wird weitere 7 Minuten geknetet.

### Beispiel 2

Es wird wie in Beispiel 1 verfahren, doch setzt man statt 10 Gew.% nun 30 Gew.% p-Aminobenzoylcaprolactam zu.

### Beispiel 3

In einem Haake Rheomix Kneter mit einer auf 240°C vorgeheizten 60ml Mischkammer werden 36g Polyamid-6 (Zahlenmittel des Molekulargewichtes von 23000 g/mol) 2 Minuten bei 240°C und 60U/min aufgeschmolzen. Dann gibt man 4g p-Aminobenzoylcaprolactam zu. Innerhalb von 30 Sekunden fällt das Drehmoment von 2.5 auf 0.5Nm, steigt über eine Minute auf 2.4 Nm. In den weiteren 2.5 Minuten wird keine Änderung des Drehmomentes festgestellt.

### Beispiel 4

Nach dem Verfahren von Beispiel 1 werden 0.8g p-Aminobenzoylcaprolactam und 39.2 g Polyamid-6 gemischt.

### Beispiel 5

Nach dem Verfahren von Beispiel 1 werden 2g p-Aminobenzoylcaprolactam und 38g Polyamid-6 gemischt.

### Charakterisierung

### Elektronenmikroskopie

Die Polypropylenlegierungen wurden mit Rutheniumtetroxid kontrastiert. Dünnschnitte von 70 bis 120nm Durchmesser wurden mit dem Ultramikrotom (Reichert Jung, Ultracut E mit Diamantmesser) hergestellt. Die Aufnahmen mit dem Zeiss CEM 902 Transmissionselektronenmikroskop mit elastischer Hellfeldabbildung zeigen nadelförmige Mikrophasen mit 300nm Durchmesser und 1200nm Länge.

Aus Polyamidlegierungen wurden in der Presse bei 240°C 0.1mm dicke Filme hergestellt, die 12h bei 90°C mit 10% Phosphorwolframsäure kontrastiert wurden. Nach Einbettung in Epoxidharz wurden im Naßschneideverfahren 0.1µm dünne Schnitte präpariert. Im Elektronenmikroskop zeigen sich Fibrillenbündel von feinen nadelförmigen Kristallen.

### Mechanische Prüfung

Die Mischungen wurden bei 260°C im Vakuum zu 1.6mm dicken Platten gepresst. Für die Zugprüfung wurden nach DIN 53455 maßstabsgetreu verkleinerte Prüfkörper von 18mm heregestellt und mit einer Querhauptsgeschwindigkeit von 10mm/min vermessen. Die Polyamidprüfkörper wurden vor der Messung konditioniert (3 Tage bei 60°C in Wasser, dann 4 Tage bei Raumtemperatur). An 5 Prüfkörpern wurden Young-Modul, Streckspannung und Reißdehnung ermittelt. Die Ergebnisse sind in der Tabelle zusammengestellt.

| Beispiel | Komp. A | Komp. B (Gew.%) | Y-Modul (MPa) | Streckspannung (MPa) | Reißdehnung (%) |
|---|---|---|---|---|---|
| 1 | Polypropylen | 10 | 1200 | 33 | 19 |
| 2 | " | 30 | 1240 | 27 | 9 |
| | Polyamid-6 | 0 | 810 | 38 | 150 |
| 3 | " | 10 | 1620 | 30 | 15 |
| 4 | " | 5 | 1440 | 39 | 25 |
| 5 | " | 2 | 1120 | 30 | 15 |

## Patentansprüche

1. Polymermischungen dadurch gekennzeichnet, daß in Komponente A, bestehend aus einem oder mehreren thermoplastischen Polymeren, Komponente B, bestehend aus einer oder mehreren Verbindungen mit der Struktur 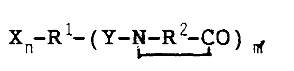 zu linearen, verzweigten oder vernetzten, hoch- oder niedermolekularen Polymeren umgesetzt wird, wobei X = NH₂, NHR³, OH , Y = CO, SO₂, R⁵P=O, R¹ einen zwei- oder mehrwertigen aliphatischen, aromatischen, heterocyclischen oder heteroatomhaltigen Rest, R² einen zweiwertigen aliphatischen Rest (CH2)ₒ mit 1<o<15, R³ und R⁵ aliphatische, cycloaliphatische und aromatische Reste und n,m ganze Zahlen mit 1 ≦ m,n ≦ 5, vorzugsweise m=n=1, bedeuten.

2. Mischungen nach Anspruch 1, dadurch gekennzeichnet, daß Komponente B aus Verbindungen der Struktur 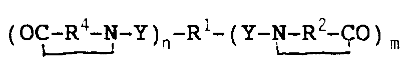 besteht, in der R⁴ einen zweiwertigen aliphatischen Rest der Formel (CH₂)ₒ mit 1<o<15 darstellt und wobei die Komponente B mit aromatischen, aliphatischen, cycloaliphatischen oder araliphatischen Diaminen bei einem Lactam/Diamin-Molverhältnis größer als 0,5 und kleiner als 1,5 zur Reaktion gebracht werden.

3. Mischungen gemäß Anspruch 1, dadurch gekennzeichnet, daß Komponente A besteht aus Olefinhomo- oder -copolymeren, Ethylencopolymeren mit Vinylacetat und/oder Methacrylsäure und deren Derivaten, Styrolhomo-und -copolymeren, enthaltend Methacrylsäureester, Butadien, Acrylnitril, Butadien/Acrylnitril.

4. Mischungen gemäß Anspruch 1, dadurch gekennzeichnet, daß Komponente A eine polares heteroatomhaltiges thermoplastisches Polymer ist.

5. Mischungen gemäß Anspruch 1, wobei Komponente B aus aromatischen, aliphatischen, cycloaliphatischen, araliphatischen, heterocyclischen oder heteroatomhaltigen Verbindungen enthaltend eine Aminogruppe und eine N-Carbonyllactamgruppe besteht.

6. Mischungen gemaß Anspruch 1, dadurch gekennzeichnet, daß Komponente A und Komponete B in der Schmelze mischbar sind.

7. Mischungen gemäß Anspruch 1 dadurch gekennzeichnet, daß bei der Polymerisation der Komponente B ein nieder- oder hochmolekulares Reaktionsprodukt ensteht, das in der Komponente A nicht mehr löslich ist.

8. Mischungen gemäß Anspruch 1 dadurch gekennzeichnet daß Komponente A eine nieder- oder hochmolekulare Verbindung enthält, welche über eine funktionelle Gruppe verfügt, die mit der Endgruppe der Komponente B oder ihrer nieder- oder hochmolekularen Reaktionsprodukte reagiert, wobei das Molverhältnis der funktionellen Gruppe X im Verhältnis zur funktionellen Gruppe der Komponente A <1 ist.

9. Mischungen gemäß Anspruch 1, dadurch gekennzeichnet, daß die aus dem Reaktionsprodukt von B gebildete Mikrophase anisotrop ist mit Längen/Durchmesser-Verhältnissen >1.

10. Mischungen gemäß Anspruch 1, dadurch gekennzeichnet, daß das aus Komponente B gebildete nieder- oder hochmolekulare Reaktionsprodukt oberhalb der Erweichungstemperatur der Komponente A erweicht.

11. Mischungen gemäß Anspruch 1, dadurch gekennzeichnet, daß der Rest R¹ der Komponente B aus ringsteifen aromatischen oder heteroatomhaltigen Segmenten zusammengesetzt ist, die bei der Reaktion der Komponente B ein nieder- oder hochmolekulares steifkettiges Reaktionsprodukt bilden.

12. Mischungen gemäß Anspruch 1, dadurch gekennzeichnet, daß neben den Komponenten A und B Zuschlagsstoffe wie Füllstoffe, Stabilisatoren, Pigmente, Farbstoffe, Weichmacher, Additive anwesend sind.

13. Mischungen gemäß Anspruch 1, dadurch gekennzeichnet, daß weniger als 50 Gewichtsprozent der Komponente B, bezogen auf die Mischung von A und B zugegeben werden, mit der Maßgabe, daß die Komponente A die kontinuierliche Phase darstellt.

14. Mischungen gemäß Anspruch 1, dadurch gekennzeichnet, daß bei Thermoplastizität der polymerisierten Komponente B der Anteil von B bis zu 90 Gew.% beträgt.

15. Verfahren zur Herstellung von Mischungen gemäß Anspruch 1, dadurch gekennzeichnet, daß die Komponente B zur Schmelze der Komponente A zugesetzt wird.

16. Verfahren zur Herstellung von Mischungen gemäß Anspruch 1, dadurch gekennzeichnet, daß Komponente B und Komponente A unterhalb der Erweichungstemperatur von Komponente A vorgemischt werden.

17. Verwendungen von Mischungen gemäß Anspruch 1 als selbstverstärkende Kunststoffe, Formmassen, Mikroverbunde, Spritzgußmasse, Röhren, Stangen, Profile, Fasern, Beschichtungen, Folien, Filme, Klebstoffe, Extrudate.

## Claims

1. Polymer blends characterized by the fact that, in component A, consisting of one or more thermoplastic polymers, component B, consisting of one or more compounds with the structure Xₙ-R¹-(Y-N-R²-CO)ₘ, is converted to linear, branched or cross-linked, high-molecular or low-molecular polymers where X = NH₂, NHR³ or OH, Y = CO, SO₂ or R⁵P=O, R¹ is a divalent or multivalent aliphatic, aromatic, heterocyclic or heteroatomic radical, R² is a divalent aliphatic radical (CH2)ₒ where 1 < o < 15, R³ and R⁵ are aliphatic, cycloaliphatic or aromatic radicals, and n, m are whole numbers described by the relationship 1 ≦ m,n ≦ 5, preferably with m = n = 1.

2. Blends in conformity with claim 1, characterized by the fact that component B consists of compounds with the structure
(OC-R⁴-N-Y)ₙ-R¹-(Y-N-R²-CO)ₘ
where R⁴ is a divalent aliphatic radical with the formula (CH₂)ₒ where 1 < o < 15, and component B can be reacted with aromatic, aliphatic, cycloaliphatic or arylaliphatic diamines when the lactam/diamine molar ratio is greater than 0.5 and less than 1.5.

3. Blends in conformity with claim 1, characterized by the fact that component A consists of olefin homopolymers or olefin copolymers, ethylene copolymers with vinyl acetate and/or methacrylic acid and their derivatives, styrene homopolymers and styrene copolymers, containing methacrylic acid ester, butadiene, acrylonitrile, butadiene/acrylonitrile.

4. Blends in conformity with claim 1, characterized by the fact that component A is a polar, heteroatomic, thermoplastic polymer.

5. Blends in conformity with claim 1, characterized by the fact that component B consists of aromatic, aliphatic, cycloaliphatic, arylaliphatic, heterocyclic or heteroatomic compounds containing an amine group and a N-carbonyl lactam group.

6. Blends in conformity with claim 1, characterized by the fact that component A and component B are miscible in a melt.

7. Blends in conformity with claim 1, characterized by the fact that during polymerization of component B a low-molecular or high-molecular reaction product is formed, which is no longer soluble in component A.

8. Blends in conformity with claim 1, characterized by the fact that component A contains a low-molecular or high-molecular compound which has a functional group that reacts with the terminal group of component B or its low-molecular or high-molecular reaction products, whereby the molar ratio of functional group X to the functional group of component A is < 1.

9. Blends in conformity with claim 1, characterized by the fact that the microphase formed from the reaction product of B is anisotropic with length/diameter relationships > 1.

10. Blends in conformity with claim 1, characterized by the fact that the low-molecular or high-molecular reaction product formed from component B softens at a temperature above the softening temperature of component A.

11. Blends in conformity with claim 1, characterized by the fact that radical R¹ of component B is composed of stiff-ringed aromatic or heteroatomic segments, which form a low-molecular or high-molecular stiff-chained reaction product during the reaction of component B.

12. Blends in conformity with claim 1, characterized by the fact that not only components A and B are present but also additional substances such as fillers, stabilizers, pigments, colorants, plasticizers and additives.

13. Blends in conformity with claim 1, characterized by the fact that less than 50 percent by weight of component B is added with respect to the blend of A and B, provided that component A is the continuous phase.

14. Blends in conformity with claim 1, characterized by the fact that if the polymerized component B has thermoplastic properties the proportion of B is up to 90 % by weight.

15. Processes for preparing blends in conformity with claim 1, characterized by the fact that component B is added to the melt of component A.

16. Processes for preparing blends in conformity with claim 1, characterized by the fact that component A and component B are preblended below the softening temperature of component A.

17. Applications for blends in conformity with claim 1 as self-reinforcing plastics, moulding compounds, microcomposites, injection moulding compound, pipes, rods, sections, fibres, coatings, sheets, films, adhesives, extrudates.

## Revendications

1. Mélanges de polymères caractérisés par le fait que dans le composant A, consistant en un ou plusieurs polymères thermoplastiques, le composant B, consistant en une ou plusieurs combinaisons ayant la structure Xₙ-R¹-(Y-N-R²-CO)ₘ, est transformé en polymères linéaires ramifiés ou réticulés de haut ou de faible poids moléculaire, alors que X = NH₂, NHR³, OH, Y = CO, SO₂, R⁵P = O, R¹ signifient un reste aliphatique, aromatique, hétérocyclique ou hétéroatomique bivalent ou polyvalent, R² signifie un reste aliphatique bivalent (CH2)₀ avec 1<0<15, R³ et R⁵ signifient des restes aliphatiques, cyclo-aliphatiques et aromatiques et n,m des nombres entiers avec 1 ≦ m,n ≦ 5, de préférence m=n=1.

2. Mélanges selon la revendication 1, caractérisés par le fait que le composant B consiste en combinaison de la structure
(OC-R⁴-N-Y)ₙ-R¹-(Y-N-R²-CO)ₘ
au sein de laquelle R⁴ représente un reste aliphatique bivalent de la formule (CH₂)₀ avec 1<0<15 et par le fait que l'on fait réagir le composant B avec diamines aromatiques aliphatiques cyclo-aliphatiques ou araliphatiques d'un rapport molaire lactame/diamine plus grand que 0,5 et plus petit que 1,5.

3. Mélanges selon la revendication 1, caractérisés par le fait que le composant A consiste en homopolymères ou en copolymères d'oléfine, en copolymères d'étyhlène avec acétate vinylique et/ou acide méthacrylique et leurs dérivés, homopolymères et copolymères de styrène, contenant de l'ester méthacrylique, du butadiène, du nitrile acrylique, du butadiène/nitrile acrylique.

4. Mélanges selon la revendication 1, caractérisés par le fait que le composant A est un polymère hétéroatomique tnermoplastique polaire.

5. Mélanges selon la revendication 1, alors que le composant B consiste en combinaisons aromatiques, aliphatiques, cyclo-aliphatiques, araliphatiques, hétérocycliques ou hétéroatomiques contenant un groupe amino et un groupe N-carbonyle-lactame.

6. Mélanges selon la revendication 1, caractérisés par le fait que le composant A et le composant B sont miscibles au moment de la fonte.

7. Mélanges selon la revendication 1, caractérisés par le fait que lors de la polymérisation du composant B un produit de réaction de haut ou de faible poids moléculaire se développe et n'est plus soluble dans le composant A.

8. Mélanges selon la revendication 1, caractérisés par le fait que le composant A contient une combinaison de haut ou de faible poids moléculaire qui dispose d'un groupe fonctionnel réagissant avec le groupe terminal du composant B ou avec ses produits de réaction de faible ou de haut poids moléculaire, bien que le rapport molaire du groupe fonctionnel X est <1 par rapport au groupe fonctionnel du composant A.

9. Mélanges selon la revendication 1, caractérisés par le fait que la microphase formée par le produit de réaction de B est anisotrope avec des rapports longueurs/diamètre >1.

10. Mélanges selon la revendication 1, caractérisés par le le produit de réaction de faible ou de haut poids moléculaire formé à partir du composant B ramollit au-dessus de la température d'amollissement du composant A.

11. Mélanges selon la revendication 1, caractérisés par le fait que le reste R¹ du composant B est composé de segments aromatiques ou hétéroatomiques ayant l'aspect de bandes en forme d'anneaux qui lors de la réaction du composant B forment un produit de réaction en chaîne rigide de faible ou de haut poids moléculaire.

12. Mélanges selon la revendication 1, caractérisés par le fait qu'en plus des composants A et B des aggrégats tels que des matières de remplissage, des stabilisateurs, des pigments, des matières colorantes, des émollients, des additifs sont présents.

13. Mélanges selon la revendication 1, caractérisés par le fait que moins de 50 % en poids du composant en ce qui concerne le mélange de A et de B sont ajoutés sous réserve que le composant A représente la phase continue.

14. Mélanges selon la revendication 1, caractérisés par le fait qu'en ce qui concerne la thermoplasticité du composant B polymérisé la part de B puisse atteindre jusqu'à 90 % en poids.

15. Méthode pour la fabrication de mélanges selon la revendication 1, caractérisée par le fait que le composant B soit ajouté pour la fonte du composant A.

16. Méthode pour la fabrication de mélanges selon la revendication 1, caractérisée par le fait que le composant B et le composant A soient prémélangés en-dessous de la température d'amollissement du composant A.

17. Utilisations de mélanges selon la revendication 1 en tant que matières synthétiques, matières moulables, microcomposés, matière à mouler par injection, tubes, barres, profilés, fibres, couches, feuilles, films, colles, produits d'extrusion autorenforçants.
